# NEUE EUROPÄISCHE PATENTSCHRIFT

(11) **EP 1 262 521 B2**
(45) Veröffentlichungstag und Bekanntmachung des Hinweises auf die Entscheidung über den Einspruch: **17.07.2013**
(45) Hinweis auf die Patenterteilung: 02.09.2009
(21) Anmeldenummer: 02009521.2
(22) Anmeldetag: 26.04.2002
(51) Int. Cl.: C08L 57/00, C09D 5/02, D21H 19/56

(54) **Pigmenthaltige wässrige Harzzubereitung mit Pigmentverteiler**
Pigmented aqueous resin composition comprising a pigment dispersing agent
Composition aqueuse de résine et pigment contenant un agent dispersant

(30) Priorität: 31.05.2001 DE 10126717
(43) Veröffentlichungstag der Anmeldung: 04.12.2002
(73) Patentinhaber: BASF SE, 67056 Ludwigshafen (DE)
(72) Erfinder: Schlarb, Bernhard, Dr., 67067 Ludwigshafen (DE); Dersch, Rolf, Dr., 67434 Neustadt (DE); Christie, David, Dr., Singapur (SG); Weingart, Franz, Dr., 69469 Weinheim (DE)

(56) Entgegenhaltungen:
- EP-A- 0 773 245
- EP-A2- 1 077 237
- DE-A- 4 236 316
- DE-A- 19 811 314
- DE-A1- 19 838 850
- JP-A- 3 081 379
- US-A- 4 243 430
- US-A- 4 521 494

## Beschreibung

Die vorliegende Erfindung betrifft eine pigmenthaltige, lösungsmittelfreie Zubereitung, enthaltend
I) ein Bindemittel auf der Basis wenigstens eines Copolymerisats P in Form einer wässrigen Polymerisatdispersion, welche erhältlich ist durch radikalische, wässrige Emulsionspolymerisation einer Monomermischung, enthaltend
   a) 45 bis 69,95 Gew.-% wenigstens eines Monomeren a), dessen Homopolymerisat eine Glastemperatur Tg von weniger als 20°C aufweist,
   b) 30 bis 54,95 Gew.-% wenigstens eines Monomeren b), dessen Homopolymerisat eine Glastemperatur Tg von mehr als 50°C aufweist,
   c) 0,05 bis 1,5 Gew.-% Itaconsäure bzw. deren Anhydrid bzw. deren Salze als saures Monomer c), und
   d) 0 bis 2 Gew.-% wenigstens eines weiteren Monomeren d),
   wobei die Summe der Gew.-% a) bis d) 100 Gew.-% beträgt,
II) wenigstens ein Pigment,
III) wenigstens einen Pigmentverteiler mit einer Säurezahl, bestimmt nach DIN 53402, von weniger als 300, wie in Anspruch 1 definiert,
IV) gegebenenfalls einen anorganischen Füllstoff und
V) übliche Hilfsmittel.

Weiterhin betrifft die vorliegende Erfindung ein Verfahren zur Herstellung der erfindungsgemäßen pigmenthaltigen, lösungsmittelfreien Zubereitung sowie deren Verwendung als Dispersionsfarbe.

Zur Reduzierung der Umweltbelastung und aus arbeitshygienischen Gründen ist es wünschenswert, daß Beschichtungsmassen, insbesondere solche, die in geschlossenen Räumen verwendet werden, wie beispielsweise Dispersionsfarben, Kunststoff-Dispersions-Putze oder Fliesenkleber keine nichtwässrigen, flüchtigen, organischen oder anorganischen Bestandteile an die Umgebung abgeben. Dies kann im Prinzip teilweise dadurch erreicht werden, daß man als Bindemittel für diese Beschichtungssysteme wässrige Polymerisatdispersionen verwendet.

Konventionelle Bindemittel auf Basis wässriger Polymerisatdispersionen enthalten jedoch in der Regel noch geringe Mengen an organischen Lösungsmitteln. Diese sind notwendig, um die mittlere Filmbildetemperatur der Bindemittel zu verringern und so eine Verarbeitung der Beschichtungsmassen auch bei niedrigen Temperaturen zu gewährleisten. Auch kann die mittlere Filmbildetemperatur der polymeren Bindemittel durch "innere Weichmachung", d.h. durch Herabsetzen der Glastemperatur des Bindemittelpolymerisats verringert werden (siehe Ullmann's Encyclopaedia of Industrial Chemistry, 5 Ed. Vol. A21, S. 169). Bei einer zu niedrigen Filmbildetemperatur des polymeren Bindemittels besteht jedoch die Gefahr, daß die Beschichtungsmassen ein schlechtes Pigmentbindevermögen und keine ausreichende mechanische Festigkeit aufweisen sowie darüber hinaus leicht anschmutzen (siehe H. Rinno, farbe + lack, 99 (1993) 697 ff).

Aus Kostengründen ist es vorteilhaft, daß das Bindemittel große Mengen an Füllstoffen zu binden vermag. Dispersionsinnenfarben weisen beispielsweise Pigmentvolumenkonzentrationen PVK (PVK= Pigmentvolumen/(Pigmentvolumen + Bindemittelvolumen); vgl. Ullmanns Enzyklopädie der Technischen Chemie, 4. Aufl. Bd. 15, S. 667) im Bereich von 50 bis 85 % auf. Wird die vom Bindemittel tolerierte PVK überschritten, weist der Anstrichfilm keine ausreichende Naßabriebfestigkeit mehr auf. Nach H. Warson ('Synthetic Resin Emulsions', E.Benn Ltd., London, 1972, S. 776ff) weisen Polymerisate dann eine hohe Pigmentbindekraft auf, wenn sie 1 bis 4 Gew.-%, Carboxylgruppen aufweisende Monomere einpolymerisiert enthalten. Bei hochwertigen Bindemitteln liegt der Gehalt an diesen Monomeren sogar zwischen 2,5 und 7 Gew.-%. Andererseits besteht bei einem zu hohen Säuregehalt die Gefahr, daß das Polymerisat zu wasserlöslich wird und somit die Naßabriebfestigkeit der Beschichtungsmassen abnimmt.

In der Literatur finden sich eine Reihe von Beispielen für Polymerisatdispersionen, die sich als lösungsmittelfreie Bindemittel für emissionsarme Beschichtungsmassen eignen. So beschreiben beispielsweise die EP-A-327 006 und die EP-A-327 376 Polymerisatdispersionen auf der Basis von Vinylestern, die in geringen Mengen Silanmonomere mit einpolymerisiert enthalten. Die EP-A-612 771 beschreibt ähnliche Bindemittelpolymerisate auf Basis von Acrylestern, die 1 bis 4 Gew.-% Monomere mit Carboxylgruppen und wenigstens ein Silanmonomer einpolymerisiert enthalten. Bereits ein geringer Einbau von Vinylsilanmonomeren erhöht jedoch die Herstellungskosten für die Bindemittel in beträchtlichem Maße. Zudem muß damit gerechnet werden, daß sich durch Hydrolyse der Silangruppen die Eigenschaften des Bindemittels bei Lagerung verändern.

Aus der EP-A 810 274 sind Bindemittel für lösungsmittelfreie Innenfarben bekannt, die Säuregruppen enthaltende Monomere in einer Menge von bis zu 1 Gew.-%, bezogen auf das Gesamtgewicht der zu polymerisierenden Monomere, einpolymerisiert enthalten können.

Die WO-A 94/21699 beschreibt Bindemittel für lösungsmittelfreie Innenfarben, die bis zu 5 Gew.-% an einpolymerisierten Monomeren mit sauren Gruppen enthalten können und die aus einem Vorpolymerisat einer ganz bestimmten Teilchengröße hergestellt werden.

Gegenstand der WO-A 99/47611 sind pigmenthaltige, wässrige Zubereitungen, welche u.a. als Bindemittel ein Copolymer enthalten, das 0,1 bis 1,5 Gew.-% Itaconsäure aufweist. In den Beispielen der WO-A 99/47611 wird als Pigmentverteiler ein Salz der Polyacrylsäure verwendet.

In der EP-A 915 071 werden Copolymere offenbart, welche 0,2 bis 5 Gew.-% Itaconsäure enthalten. Diese Copolymere werden zur Beschichtung mineralischer Formkörper verwendet.

Weiterhin sind aus der WO-A 93/11181 und der WO-A 98/33831 itaconsäurehaltige Copolymere bekannt, die für die Herstellung von Pigmentpasten bzw. als Bindemittel für lösungsmittelfreie Innenfarben geeignet sind.

Die in diesen Veröffentlichungen beschriebenen Bindemittel vermögen die Anforderungen, welche bei deren Anwendung für pigmenthaltige, lösungsmittelfreie Zubereitungen auftreten, nur teilweise zu erfüllen. Für einige Anwendungen bei lösungsmittelfreien Farbformulierungen ist es insbesondere notwendig, ein Bindemittel bereitzustellen, welches auch bei Farbformulierungen mit einer Pigmentvolumenkonzentration (PVK) von mehr als 75 % noch eine abriebfeste und scheuerfeste Farbe ergibt.

Der vorliegenden Erfindung lag daher die Aufgabe zugrunde, den geschilderten Nachteilen abzuhelfen und eine pigmenthaltige, lösungsmittelfreie Zubereitung zu entwickeln, welche auch bei einer hohen Pigmentvolumenkonzentration (PVK) von mehr als 75 % einen sehr guten Naßabrieb und eine hohe Naßscheuerfestigkeit aufweisen. Das innerhalb der pigmenthaltigen, lösungsmittelfreien Zubereitung vorliegende Bindemittel sollte dabei durch eine Mindestfilmbildetemperatur von weniger als 10°C gekennzeichnet sein.

Demgemäß wurde eine pigmenthaltige, lösungsmittelfreie Zubereitung gefunden, enthaltend
I) ein Bindemittel auf der Basis wenigstens eines Copolymerisats P in Form einer wässrigen Polymerisatdispersion, welche erhältlich ist durch radikalische, wässrige Emulsionspolymerisation einer Monomermischung, enthaltend
   a) 45 bis 69,95 Gew.-% wenigstens eines Monomeren a), dessen Homopolymerisat eine Glastemperatur Tg von weniger als 20°C aufweist, -
   b) 30 bis 54,95 Gew.-% wenigstens eines Monomeren b), dessen Homopolymerisat eine Glastemperatur Tg von mehr als 50°C aufweist,
   c) 0,05 bis 1,5 Gew.-% Itaconsäure bzw. deren Anhydrid bzw. deren Salze als saures Monomer c), und
   d) 0 bis 2 Gew.-% wenigstens eines weiteren Monomeren d),
   wobei die Summe der Gew.-% a) bis d) 100 Gew.-% beträgt,
II) wenigstens ein Pigment,
III) wenigstens einen Pigmentverteiler mit einer Säurezahl, bestimmt nach DIN 53402, von weniger als 300, wie in Anspruch 1 definiert,
IV) gegebenenfalls einen anorganischen Füllstoff und
V) übliche Hilfsmittel.

Das in der erfindungsgemäßen pigmenthaltigen Zubereitung enthaltene Bindemittel ist u.a. aus den Monomeren a) und b) aufgebaut, welche sich durch eine unterschiedliche Glastemperatur Tg auszeichnen.

Mit der Glastemperatur Tg ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt; sie wird nach dem DSC-Verfahren ermittelt (Differential Scanning Calorimetry, 20 K/min, midpoint). Die Tg-Werte für die Homopolymerisate der meisten Monomeren sind bekannt und z.B. in Ullmann's Ecyclopedia of Industrial Chemistry, VCH Weinheim, 1992, Bd.5, Vol. A21, S. 169 aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989).

Unter C₁-Cₙ-Alkylgruppen versteht man im folgenden lineare oder verzweigte Alkylreste mit 1 bis n-Kohlenstoffatomen, beispielsweise Methyl, Ethyl, Propyl, n-Butyl, sec-Butyl, iso-Butyl, t-Butyl, Pentyl, n-Hexyl, 2-Ethylhexyl, n-Decyl, Dodecyl, Lauryl, Stearyl. Mit C₅-C₁₀-Cycloalkylgruppen sind vorzugsweise Cyclopentyl oder Cyclohexylgruppen gemeint, die gegebenenfalls durch 1, 2 oder 3 C₁-C₄-Alkylgruppen substituiert sind.

Die in den Bindemitteln I enthaltenen Polymerisate sind zu 45 bis 69,95 Gew.-%, vorzugsweise zu 50 bis 64,95 Gew.-% aus Monomeren a) aufgebaut. Geeignete Monomere a) sind vorzugsweise Vinylether von C₃-C₁₀-Alkanolen, verzweigte und unverzweigte C₃-C₁₀-Olefine, C₁-C₁₀-Alkylacrylate, C₅-C₁₀-Alkylmethacrylate, C₅-C₁₀-Cycloalkyl(meth)acrylate, C₁-C₁₀-Dialkylmaleinate und/oder C₁-C₁₀-Dialkylfumarate. Besonders bevorzugt werden solche Monomere a) verwendet, deren Homopolymerisate Glastemperaturen unterhalb 0°C aufweisen. Insbesonders bevorzugt werden als Monomere a) Ethylacrylat, n-Propylacrylat, n-Butylacrylat, Isobutylacrylat, sec-Butylacrylat, n-Hexylacrylat, 2-Ethylhexylacrylat, n-Hexylmethacrylat, 2-Ethylhexylmethacrylat, Di-n-butylmaleinat und/oder Di-n-butylfumarat verwendet.

Geeignete Monomere b) sind vinylaromatische Monomere und/oder α,β-ungesättigte Carbonsäurenitrile oder Carbonsäuredinitrile. Sie werden in Mengen von 30 bis 54,95 Gew.-%, und vorzugsweise 35 bis 49,95 Gew.-% verwendet. Unter vinylaromatischen Monomeren versteht man insbesondere Derivate des Styrols oder des α-Methylstyrols, in denen die Phenylkerne gegebenenfalls durch 1, 2 oder 3 C₁-C₄-Alkylgruppen, Chlor und/oder Methoxygruppen substituiert sind. Bevorzugt werden solche Monomere, deren Homopolymerisate eine Glastemperatur oberhalb 80°C aufweisen. Besonders bevorzugte Monomere sind Styrol, α-Methylstyrol, o- oder p-Vinyltoluol, Acrylnitril, Methacrylnitril, Maleinsäuredinitril, Fumarsäuredinitril oder deren Mischungen.

Das Bindemittel I enthält weiterhin 0,05 bis 1,5 Gew.-%, insbesondere 0,07 bis 0,7 Gew.-% und besonders bevorzugt 0,1 bis 0,5 Gew.-% Itaconsäure bzw. deren Anhydrid oder deren Salze als saures Monomeres c). Als Salze werden dabei insbesondere die Alkali oder die Erdalkalisalze oder die Ammoniumsalze der Itaconsäure verwendet. Es ist auch möglich, ein Gemisch aus Itaconsäure mit einem oder mehreren Salzen der Itaconsäure oder aber mit dem Anhydrid der Itaconsäure einzusetzen. Vorzugsweise wird als Monomeres c) ausschließlich Itaconsäure verwendet.

Das erfindungsgemäße Bindemittel I kann auch Monomere d) in Mengen von bis zu 2 Gew.-%, vorzugsweise in Mengen von 0,5 bis 2 Gew.-%, insbesondere in Mengen von 0,5 bis 1,5 Gew.-%, einpolymerisiert enthalten. Bevorzugte Monomere sind die Amide und die Hydroxyalkylester der α,β-ungesättigten C₃-C₆-Carbonsäuren, besonders bevorzugt Acrylamid, Methacrylamid, 2-Hydroxyethylacrylat, 2-Hydroxyethylmethacrylat, 2-Hydroxypropyl(meth)acrylat oder 1,4-Butandiolmonoacrylat. Ein weiteres geeignetes Monomer ist N-Vinylpyrrolidon.

Neben den genannten Monomeren a), b), c) und d) können die Bindemittel I auch weitere Monomere enthalten, um den jeweiligen Beschichtungsmassen eine höhere Festigkeit zu verleihen. Hier sind beispielsweise Siloxangruppen enthaltende Monomere, wie die Vinyltrialkoxysilane, z.B. Vinyltrimethoxysilan, Alkylvinyldialkoxysilane oder (Meth)acryloxyalkyltrialkoxysilane, z.B. (Meth)acryloxyethyltrimethoxysilan, (Meth)acryloxypropyltrimethoxysilan zu nennen.

Weiterhin können in den Bindemitteln I auch vernetzend wirkende Monomere mit wenigstens zwei nichtkonjugierten ethylenisch ungesättigten Dopppelbindungen vorhanden sein. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Diester zweiwertiger Alkohole mit α,β-monoethylenisch ungesättigten Monocarbonsäuren unter denen Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat.

Die genannten Monomere können in Mengen von 0,05 bis 1, vorzugsweise 0,05 bis 0,5 Gew.-Teilen, bezogen auf 100 Gew.-Teile Monomere a) plus b) plus c) plus d) verwendet werden.

Die als Bindemittel I verwendeten wässrigen Polymerisatdispersionen werden durch radikalische, wässrige Emulsionspolymerisation der genannten Monomere a) bis d) in Gegenwart von 0,1 bis 0,5 Gew.-%, vorzugsweise 0,1 bis 0,4 Gew.-% und insbesondere 0,1 bis 0,3 Gew.-%, jeweils bezogen auf die Menge der Monomere a) bis d), wenigstens eines radikalischen Polymerisationsinitiators erhalten.

Die Polymerisation wird in Gegenwart radikalischer Polymerisationsinitiatoren durchgeführt. Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, Hydroperoxide, z.B. Alkalimetallperoxodisulfate als auch um Azoverbindungen handeln. Auch werden kombinierte Systeme verwendet, die aus wenigstens einem organischen Reduktionsmittel und wenigstens einem Peroxid und/oder Hydroperoxid zusammengesetzt sind, z.B. tert.-Butylhydroperoxid mit dem Natriumsalz der Hydroxymethansulfinsäure, Wasserstoffperoxid mit Ascorbinsäure oder Natriumperoxodisulfat mit Natriumdisulfit. Bevorzugte kombinierte Systeme enthalten darüber hinaus eine geringe Menge einer im Polymerisationsmedium löslichen Metallverbindung, deren metallische Komponente in mehreren Wertigkeitsstufen auftreten kann, z.B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid tert.-Butylhydroperoxid oder Alkaliperoxodisulfate und/oder Ammoniumperoxodisulfat verwendet werden. Anstelle eines wasserlöslichen Eisen(II)-Salzes wird häufig eine Kombination aus wasserlöslichen Eisen- und Vanadium-Salzen benutzt. Bevorzugte Initiatoren sind die Ammonium- oder Alkalimetallsalze von Peroxosulfaten oder Peroxodisulfaten, insbesondere Natrium- oder Kaliumperoxodisulfat.

Für die Herstellung der in den erfindungsgemäßen pigmenthaltigen Zubereitungen vorliegenden Bindemittel I wird neben den für eine Emulsionspolymerisation üblichen oberflächenaktiven Substanzen wenigstens ein nichtionischer Emulgator in Mengen von vorzugsweise 0,5 bis 10 Gew.-%, insbesondere 1 bis 8 Gew.-% und besonders bevorzugt 1,5 bis 4 Gew.-%, jeweils bezogen auf die Gesamtmonomermenge verwendet. Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad 10 bis 50 als alleinige, nichtionische Emulgatoren verwendet.

Weitere gebräuchliche Emulgatoren sind vorzugsweise anionischer Natur. Hierzu zählen Alkali- und Ammoniumsalze von Alkylsulfaten (Alkylrest: C₈-C₁₆), von Schwefelsäurehalbestern ethoxylierter Alkanole (EO-Grad: 2 bis 50, Alkylrest: C₁₂ bis C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192-208.

Bevorzugte anionische grenzflächenaktive Substanzen sind Verbindungen der allgemeinen Formel A, 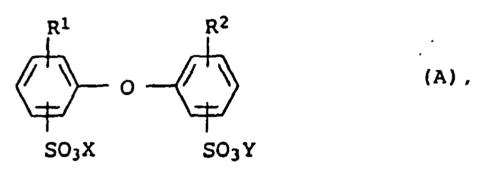 worin R¹ und R² Wasserstoff oder C₄-C₂₄-Alkyl bedeuten und nicht gleichzeitig Wasserstoff sind, und X und Y Alkalimetallionen und/oder Ammoniumionen sein können. In der Formel (A) bedeuten R¹ und R² bevorzugt lineare oder verzweigte Alkylreste mit 6 bis 18 C-Atomen oder Wasserstoff, und insbesondere mit 6, 12 und 16 C-Atomen, wobei R¹ und R² nicht beide gleichzeitig Wasserstoff sind. X und Y sind bevorzugt Natrium, Kalium oder Ammonium, wobei Natrium besonders bevorzugt ist. Besonders vorteilhaft sind Verbindungen (A), in denen X und Y Natrium, R¹ ein verzweigter Alkylrest mit 12 C-Atomen und R² Wasserstoff oder gleich R¹ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z.B. aus der US-A 4,269,749, und im Handel erhältlich.

Darüber hinaus können geeignete Schutzkolloide, wie beispielsweise Polyvinylalkohole, Cellulosederivate oder Vinylpyrolidon enthaltende Copolymerisate eingesetzt werden. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, S. 411-420. Die Gesamtmenge an grenzflächenaktiven Substanzen macht üblicherweise bis zu 30 Gew.-%, vorzugsweise 0,5 bis 10 Gew.-% und besonders bevorzugt 2 bis 6 Gew.-%, bezogen auf die zu polymerisierenden Monomere aus.

Das Molekulargewicht der als Bindemittel verwendeten Copolymerisate P kann durch Zugabe geringer Mengen, in der Regel bis zu 2 Gew.-%, bezogen auf die zu polymerisierenden Monomere, einer oder mehrerer, das Molekulargewicht regelnder Substanzen, z.B. organische Thioverbindungen oder Allylalkohole, eingestellt werden. Bevorzugt werden jedoch solche Polymerisate, die in Abwesenheit solcher Verbindungen hergestellt wurden.

Die Emulsionspolymerisation kann sowohl kontinuierlich als auch nach der Batch-Fahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugefügt werden. Bevorzugt ist ein Zulaufverfahren mit kurzen Zulaufzeiten, d.h. die Monomere werden, vorzugsweise als wässrige Emulsion, dem Reaktionsansatz innerhalb von 1 bis 4 Stunden, vorzugsweise innerhalb von 1,5 bis 3 Stunden zudosiert. Der nichtionische Emulgator wird vorzugsweise in Mengen bis zu 20 Gew.-%, bezogen auf die Gesamtmenge an nichtionischem Emulgator, vorgelegt, wohingegen der anionische Emulgator vorzugsweise mit den Monomeren dem Reaktionsansatz zugeführt wird.

Neben der saatfreien Herstellungsweise kann zur Einstellung der Polymerteilchengroße die Emulsionspolymerisation nach dem Saatlatex-Verfahren oder in Gegenwart eines in situ hergestellten Saatlatex erfolgen. Verfahren hierzu sind bekannt und können dem Stand der Technik entnommen werden (siehe EP-A 40 419 sowie 'Encyclopedia of Polymer Science and Technology', Vol. 5, John Wiley & Sons Inc., New York, 1966, S. 847).

So empfiehlt der Stand der Technik, beim Zulaufverfahren eine definierte feinteilige Saat-Polymerisatdispersion im Polymerisationsgefäß vorzulegen und dann die Monomere in Gegenwart der Saat zu polymersieren. Hierbei wirken die Saat-Polymerisatteilchen als 'Polymerisationskeime' und entkoppeln die Polymersatteilchenbildung und das Polymerisatteilchenwachstum. Während der Emulsionspolymerisation kann weitere Saatdispersion zugegeben werden. Hierdurch werden breite Größenverteilungen der Polymerisatteilchen erreicht, die insbesondere bei Polymerdispersionen mit hohem Feststoffgehalt oftmals erwünscht sind (vgl. DE-A 42 13 965). Anstelle der Zugabe eines definierten Saatlatex kann dieser auch in situ erzeugt werden. Hierzu wird beispielsweise ein Teil der Monomere und des Initiators zusammen mit Emulgator vorgelegt und auf Reaktionstemperatur erwärmt, wobei ein relativ feinteiliger Latex entsteht. Anschliessend wird im gleichen Polymerisationsgefäß die eigentliche Polymerisation nach dem Zulaufverfahren durchgeführt (siehe auch DE-A 42 13 965).

Die Art und Weise, wie der Initiator der Emulsionspolymerisation zudosiert ist, ist nicht kritisch. Der Initiator kann sowohl vollständig im Polymerisationsgefäß vorgelegt oder aber, nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Bevorzugt wird eine kontinuierliche oder stufenweise Zudosierung zum Reaktionsansatz.

Bei der Herstellung des im Bindemittel I vorliegenden Copolymerisats P arbeitet man vorzugsweise bei Temperaturen zwischen 10°C und 120°C, bevorzugt bei Temperaturen von 50 bis 100°C und besonders bevorzugt zwischen 70 und 95°C.

Im Anschluß an die eigentliche Polymerisationsreaktion ist es in der Regel erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden.

Die Absenkung der Restmonomere kann weiterhin chemisch durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind, erfolgen. Als Oxidationsmittel zur redoxinitiierten Nachpolymerisation eignen sich insbesondere Wasserstoffperoxid, tert.-Butylhydroperoxid, Cumolhydroperoxid oder Alkaliperoxodisulfate. Geeignete Reduktionsmittel sind Natriumdisulfit, Natriumhydrogensulfit, Natriumdithionit, Natriumhydroxymethansulfinat, Formamidinsulfinsäure, Acetonbisulfit (= Natriumhydrogensulfit-Additionsproduckt an Aceton), Ascorbinsäure bzw. reduzierend wirkende Zukkerverbindungen, oder wasserlösliche Mercaptane, wie Mercaptoethanol. Die Nachpolymerisation mit dem Redoxinitiatorsystem wird im Temperaturbereich von 10 bis 100°C, vorzugsweise bei 20 bis 90°C durchgeführt. Die Redoxpartner können der Dispersion unabhängig voneinander vollständig, portionsweise bzw. kontinuierlich über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen-, Kupfer oder Vanadiumsalze, zugesetzt werden. Häufig werden auch Komplexbildner zugegeben, die die Metallsalze unter den Reaktionsbedingungen in Lösung halten.

Es ist bevorzugt, die Polymerisatdispersion abschliessend mit einer geruchsarmen Base, vorzugsweise mit Alkali- oder Erdalkalimetallhydroxyden, Erdalkalimetalloxyden oder nichtflüchtigen Aminen zu neutralisieren. Zu den nichtflüchtigen Aminen zählen insbesondere ethoxylierte Diamine, tert. Amine oder Polyamine, wie sie z.B. unter dem Namen Jeffamine® (Texaco Chemical Co.) kommerziell erhältlich sind. Vorzugsweise wird die Polymerdispersion nicht mit Ammoniak neutralisiert. Beispiele für derartige Amine sind u.a. Triethanolamin, Dimethylethanolamin oder aber Methyldiethanolamin, 2-Amino-2-Methylpropanol-1 sowie Polyethylenimin und Polyvinylamin.

Die als Bindemittel I verwendeten Copolymerisate P weisen in der Regel Mindestfilmbildetemperaturen unterhalb 10°C, bevorzugt unterhalb 5°C, und besonders bevorzugt unterhalb 3°C auf. Die über Lichtstreuung ermittelte mittlere Teilchengröße der in den Bindemitteldispersionen enthaltenen Polymerisatteilchen liegt vorzugsweise im Bereich von 100 bis 300 nm, besonders bevorzugt im Bereich von 120 bis 200 nm.

Die Lichtdurchlässigkeit (s.u.) der Dispersionen liegt in der Regel im Bereich von 40 bis 90 %, vorzugsweise im Bereich von 50 bis 80 %, und insbesondere im Bereich von 50 bis 75 %. Sie korreliert über weite Bereiche mit der Größe der dispergierten Teilchen, d.h. je grösser der LD-Wert (Lichtdurchlässigkeit einer 0,01 gew.-%igen Probe), desto geringer ist der Durchmesser der dispergierten Teilchen.

Die in den erfindungsgemässen, pigmenthaltigen Zubereitungen enthaltenen Bindemittel I sind aufgrund ihrer Herstellungsweise nahezu vollständig frei von Lösungsmitteln, Monomeren oder anderen flüchtigen Bestandteilen und somit geruchs- und emissionsarm.

Weiterhin weisen die erfindungsgemäßen, pigmenthaltigen, lösungsmittelfreien Zubereitungen ein Pigment II auf, wobei neben organischen Pigmenten insbesondere anorganische Pigmente verwendet werden.

Typische anorganische Pigmente II für die erfindungsgemäßen, lösungsmittelfreien Zubereitungen, insbesondere für Dispersionsfarben, sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, z.B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Die erfindungsgemäße, pigmenthaltige, lösungsmittelfreie Zubereitung enthält weiterhin wenigstens einen Pigmentverteiler III mit einer Säurezahl, bestimmt nach DIN 53402, von weniger als 300. Erfindungsgemäß werden als Pigmentverteiler III Copolymere von Acrylsäure, Styrol und α-Methylstyrol, Copolymere von Acrylsäure mit Alkylacrylaten wie n-Butylacrylat, verseifte Copolymere des Maleinsäureanhydrids mit C₁₀-C₃₀-α-Olefinen oder verseifte Copolymere des Maleinsäureanhydrids mit Styrol verwendet.

Darüber hinaus kann die erfindungsgemäße Zubereitung noch einen anorganischen Füllstoff IV aufweisen.

Geeignete anorganische Füllstoffe umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Dispersionsputze können auch gröbere Zuschläge, wie Sände oder Sandsteingranulate, enthalten. In Dispersionsfarben werden naturgemäß feinteilige Füllstoffe bevorzugt.

Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Weiterhin sind in der erfindungsgemäßen, pigmenthaltigen, lösungsmittelfreien Zubereitung noch übliche Hilfsstoffe enthalten. Unter der Bezeichnung übliche Hilfsstoffe fallen u.a. Viskositätsmodifizierer, Verdickungsmittel, Dispergiermittel, Entschäumer, Konservierungs- oder Hydrophobiermittel sowie Farbstoffe, Fasern oder weitere Bestandteile.

Verdickungsmittel sind beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sog. Assoziativverdicker, beispielsweise Styrol-Maleinsäureanhydrid-Polymerisate oder vorzugsweise hydrophob modifizierte Polyetherurethane, wie sie beispielsweise von N. Chen et al. in J. Coatings Techn. Vol 69, No. 867, 1997, S. 73 und von R. D. Hester et al. J. Coatings Technology, Vol. 69, No. 864, 1997, 109 beschrieben sind und auf deren Offenbarung hiermit in vollem Umfang Bezug genommen wird.

Beispiele für hydrophob modifizierte Polyetherurethane sind Polymere der allgemeinen Formel B 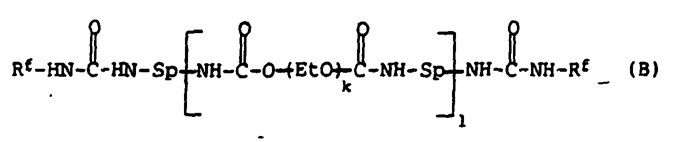 worin R^{f} für einen hydrophoben Rest, vorzugsweise einen linearen oder verzweigten Alkylrest mit 10 bis 20 Kohlenstoffatomen, Et für 1,2-Ethylen steht, Sp für C₂-C₁₀-Alkylen, Cycloalkylen oder Arylen steht, k für eine Zahl im Bereich von 50 bis 1 000 und l für eine Zahl im Bereich von 1 bis 10, wobei vorzugsweise das Produkt k x l im Bereich von 300 bis 1 000 liegt. Die Dispergier- bzw. Netzmittel werden in der Regel in einer Menge von 0,1 bis 0,6 Gew.-%, bezogen auf das Gesamtgewicht der Disperspionsfarbe, eingesetzt.

Auch anorganische Verdickungsmittel, z. B. Bentonite oder Hektorit, können verwendet werden. Verdickungsmittel werden im Allgemeinen in Mengen von 0,1 bis 3 Gew.-%, vorzugsweise 0,1 bis 1 Gew.-%, bezogen auf das Gesamtgewicht der wässrigen Zubereitung, verwendet. Ferner umfassen die Hilfsmittel V in der Regel auch Entschäumer, Konservierungs- oder Hydrophobiermittel, Biozide, Fasern oder weitere Bestandteile.

Auch können die erfindungsgemäßen Zubereitungen zur Einstellung der Filmbildeeigenschaften der Bindemittelcopolymerisate, sog. Filmbildehilfsmittel, z. B. Ethylenglykol, Propylenglykol, Butylenglykol, Hexylenglykol, Alkylether und -etherester von Glykolen und Polyglykolen, z. B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z. B. Butoxybutylacetat, ferner Alkylester aliphatischer Mono- und Dicarbonsäuren, z. B. Texanol^{®} der Eastman, oder technische Gemische von Dibutylestern der Bernsteinsäure, Glutarsäure und Adipinsäure enthalten. Filmbildehilfsmittel werden üblicherweise in Mengen von 0,1 bis 20 Gew.-%, bezogen auf das in der Zubereitung enthaltene Copolymerisat P, eingesetzt, so dass die Zubereitung eine Mindestfilmbildetemperatur weniger als 10°C und vorzugsweise im Bereich von 0 bis 10°C aufweist. Vorzugsweise ist in den erfindungsgemäßen pigmenthaltigen Zubereitungen kein Filmbildehilfsmittel enthalten.

Als übliche Hilfsmittel V können auch vernetzende Zusätze eingesetzt werden u.a. aromatische Ketone, z.B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren sind u.a. aus der DE-A 38 27 975 und der EP-A 417 568 bekannt. Geeignete vernetzend wirkende Verbindungen sind auch wasserlösliche Verbindungen mit wenigstens zwei Aminogruppen, beispielsweise Dihydrazide aliphatischer Dicarbonsäuren gemäß der DE-A 3901 073, wenn das Copolymerisat P Carbonylgruppen enthaltende Monomere einpolymerisiert enthält.

Die erfindungsgemäße, pigmenthaltige, lösungsmittelfreie Zubereitung enthält vorzugsweise, bezogen auf die nichtflüchtigen Anteile:
4,0 bis 30 Gew.-%, insbesondere 6 bis 20 Gew.-% des Bindemittels I,
1,0 bis 30 Gew.-%, insbesondere 3,0 bis 15 Gew.-% des Pigments II,
0,01 bis 1,0 Gew.-%, insbesondere 0,03 bis 0,3 Gew.-% des Pigmentverteilers III
40 bis 93 Gew.-%, des anorganischen Füllstoffs IV und
0,1 bis 10 Gew.-%, übliche Hilfsmittel V.

Die erfindungsgemäßen, pigmenthaltigen, lösungsmittelfreien Zubereitungen können nach einem Verfahren hergestellt werden, nach welchem zunächst das Bindemittel I durch radikalische wässrige Emulsionspolymerisation der Monomeren a), b) und c) sowie gegebenenfalls d) hergestellt wird, welches dadurch gekennzeichnet ist, daß das Bindemittel I anschließend mit dem Pigment II, dem Pigmentverteiler III, gegebenenfalls dem Füllstoff IV und dem Hilfsmittel V in einem Mischaggregat abgemischt wird. Unter einem Mischaggregat versteht man dabei u.a. einen Dissolver, d.h. einen Rührer mit einer schnell rotierenden Zahnscheibe.

Die radikalische, wässrige Emulsionspolymerisation der Monomeren a), b) und c) sowie gegebenenfalls d) wird dabei vorzugsweise bei Temperaturen von 10 bis 120°C, insbesondere bei Temperaturen von 50 bis 95°C und besonders bevorzugt bei Temperaturen von 70 bis 90°C durchgeführt. Die Abmischung der einzelnen Komponenten I bis V der erfindungsgemäßen Zubereitung im Dissolver erfolgt vorzugsweise bei Temperaturen von 3 bis 80°C, insbesondere von 5 bis 60°C.

Die erfindungsgemäßen Zubereitungen zeichnen sich u.a. dadurch aus, daß sie auch bei einer hohen Pigmentvolumenkonzentration (PVK) von mehr als 75 % einen sehr guten Naßabrieb und eine hohe Naßscheuerfestigkeit aufweisen. Das innerhalb der erfindungsgemäßen Zubereitung vorliegende Bindemittel ist dabei durch eine Mindestfilmbildetemperatur (MFT) von weniger als 10°C gekennzeichnet. Aufgrund der sehr guten Naßabriebeigenschaften kann bei den erfindungsgemäßen pigmenthaltigen Zubereitungen auf die Mitverwendung von Polyphosphaten, die sonst üblicherweise zusammen mit den Pigmentverteilern eingesetzt werden, verzichtet werden.

Die erfindungsgemäßen Zubereitungen sind stabile, fluide Systeme, welche man zur Beschichtung einer Vielzahl von Substraten verwenden kann. Das Aufbringen kann, abhängig von der Viskosität-und dem Pigmentgehalt der Zubereitung sowie der Eigenschaften des Substrats u.a. mittels Rollen, Bürsten, Rakeln oder als Spray erfolgen. Die erfindungsgemäßen Zubereitungen eignen sich u.a. als Dispersionsfarbe oder als Papierstreichfarbe.

### Beispiele

### A. Analytik

Die Teilchengrösse (Z-Mittelwert) der Polymerisatteilchen wurde durch dynamische Lichtstreuung an einer 0,01 gew.-%igen Dispersion bei 23°C mittels eines Autosizer IIc der Fa. Malvern Instruments, England, ermittelt. Angegeben wird der mittlere Durchmesser der Kumulantenauswertung (cumulant z-average) der gemessenen Autokorrelationsfunktion.

Die Lichtdurchlässigkeit (LD-Wert) wurde an einer 0,01 gew.-%igen Dispersion bei einer Schichtdicke von 25 mm mit weißem Licht in einem handelsüblichen Photometer ermittelt. Gemessen wird relativ zu Wasser, dem ein LD-Wert von 100 % zugeordnet wird.

Die Bestimmung der Mindestfilmbildetemperatur (MFT) erfolgte in Anlehnung an Ullmanns Enzyklopädie der technischen Chemie, 4. Aufl., Bd. 19, Verlag Chemie, Weinheim (1980), S. 17. Als Meßgerät diente eine Filmbildebank (Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden.

### B. Vorschrift zur Herstellung der Bindemittel:

In einem Polymerisationsreaktor mit einem Volumen von 2 Litern,der mit einem Ankerrührer (150 Umdrehungen pro Minute), Rückflußkühler und zwei Zulaufgefäßen ausgerüstet war, wurde eine Vorlage in einer Stickstoffatmosphäre auf 85°C aufgeheizt. Dann wurden 5 g einer 2,5%igen Natriumpersulfat-Lösung zugetropft und 5 min weitergerührt. Dann wurden die Zuläufe 1 (gerührter Emulsionszulauf) und 2 gestartet und über einen Zeitraum von 2,5 Stunden zudosiert. Danach wurde 30 min. lang nachpolymerisiert. Anschließend wurden die Zuläufe 3 und 4 ebenfalls bei 85°C innerhalb einer Stunde zudosiert. Dann wurde auf Raumtemperatur abgekühlt und mit 10%iger wässriger Natronlauge neutralisiert. Die erhaltene Dispersion wurde über ein Sieb der Maschenweite 500 µm filtriert. Die einzelnen Bestandteile der Zuläufe sind in der nachfolgenden Tabelle I aufgelistet.

### Anmerkungen:

Die verwendete Polystyrol-Saat-Dispersion hatte eine Teilchengröße, bestimmt mittels analytischer Ultrazentrifuge, von 30 nm.
Emulgator 1 = Oxoalkoholethoxylat (Alkylrest: Isotridecyl; mittlerer Ethoxylierungsgrad 8)
Emulgator 2 = Dinatrium-p-dodecyldiphenyletherdisulfonat (Dowfax 2A1)
Emulgator 3 = Natriumlaurylsulfat (Texapon K 12)

**Tabelle I**

| | Bindemittel Nr. 1 (Vergleichsbeispiel) | Bindemittel Nr. 2 (erfindungsgemäß) | Bindemittel Nr. 3 (erfindungsgemäß) |
|---|---|---|---|
| Vorlage: | | | |
| Wasser | 235 g | 235 g | 235 g |
| Polystyrol-Saat (33,4%ig, in Wasser) | 12,2 g | 12,2 g | 12,2 g |
| | | | |
| Zulauf 1: | | | |
| Wasser | 166 g | 126 g | 149 g |
| Emulgator 1 (20%ig, in Wasser) | 89 g | 89 g | 89 g |
| Emulgator 2 (20%ig, in Wasser) | 11,4 g | 11,4 g | 11,4 g |
| Emulgator 3 (10%ig, in Wasser) | 51,1 g | 51,1 g | 51,1 g |
| Acrylamid (50%ig, in Wasser) | 19,5 g | 19,5 g | 19,5 g |
| Acrylsäure | 1,95 g | - | - |
| Itaconsäure (5%ig in Wasser) | - | 41,5 g | 19,5 g |
| Säuregehalt im Polymer [%] | 0,3 Acrylsäure | 0,3 Itaconsäure | 0,15 Itaconsäure |
| n-Butylacrylat | 383,5 g | 383,5 g | 383,5 g |
| Styrol | 254,8 g | 254,8 g | 254,8 g |
| | | | |
| Zulauf 2: | | | |
| Natriumpersulfat-Lösung (2,5%ig, in Wasser) | 78 g | 78 g | 78 g |
| | | | |
| Zulauf 3: | | | |
| tert.-Butylhydroperoxid (10%ig, in Wasser) | 27 g | 27 g | 27 g |
| | | | |
| Zulauf 4: | | | |
| Ascorbinsäure-Lösung (10%ig, in Wasser) | 25 g | 25 g | 25 g |
| | | | |
| Dispersion: | | | |
| Feststoffgehalt | 49,3 % | 49,6 % | 49,4 % |
| Teilchengröße | 149 nm | 143 nm | 148 nm |
| MFT | 1°C | 1°C | 1°C |
| LD-Wert | 74 | 74 | 70 |

### C. Herstellung der Dispersionfarben:

Die Dispersionsfarben wurden durch Abmischen der Komponenten mittels eines Dissolvers in der Reihenfolge, wie in den Rezepten angegebenen, hergestellt.

**Rezept Nr. 1**

| Gew.-Teile | Komponente |
|---|---|
| 300 | Wasser |
| 1 | 20 gew.-%ige wässr. Lösung von Kaliumhydroxid |
| 6 | Verdicker, Celluloseether, Natrosol 250 HR d. Fa. Hercules GmbH, Düsseldorf |
| 3 | Pigmentverteiler S, 45 gew.-%ige Lösung eines Natriumpolyacrylates der BASF AG, Ludwigshafen |
| 3 | 50 gew.-%ige wässrige Lösung von Tetrakaliumpyrophosphat |
| 2 | Konservierungsmittel, Parmetol A 26 der Fa. Schülke & Mayr GmbH, Norderstedt, auf Basis von Isothiazolinonderivaten und N- und O-Formalen. |
| 2 | Entschäumer, Agitan E 255 der Fa. Münzing Chemie GmbH, Heilbronn, ein Polysiloxancopolymer, emulgiert in Wasser |
| 90 | Pigment, Titandioxid, Kronos 2300 der Fa. Kronos Titan GmbH, Leverkusen |
| 215 | Füllstoff, Calciumcarbonat, mittlerer Teilchendurchmesser 2,5 mµ, Omyacarb 5 GU der Fa. Omya GmbH, Köln |
| 185 | Füllstoff, Calciumcarbonat, mittlerer Teilchendurchmesser 5 mµ, Omyacarb 5 GU der Fa. Omya GmbH, Köln |
| 65 | Füllstoff, Mischung aus Magnesiumsilikat (Talkum) und Calcium/Magnesiumcarbonat (Dolomit), mittlerer Teilchendurchmesser 6 mµ, Naintsch SE-Micro der Fa. Luzenac Deutschland GmbH, Düsseldorf |
| 2 | Entschäumer, Agitan E 255 der Fa. Münzing Chemie GmbH, Heilbronn, ein Polysiloxancopolymer, emulgiert in Wasser |
| 110 | Dispersion (=Bindemittel), 50 %ig in Wasser, hergestellt nach Vorschrift in Abschnitt B |
| 16 | Wasser |

**Rezept Nr. 2**

| Gew.-Teile | Komponente |
|---|---|
| 120 | Wasser |
| 1 | 20 gew.-%ige wässrige Lösung von Natriumhydroxid |
| x Gew.-Teile | Dispergiermittel (=Pigmentverteiler), aus Tabelle II |
| 3 | Konservierungsmittel, Parmetol A 26 der Fa. Schülke & Mayr GmbH, Norderstedt, auf Basis von Isothiazolinonderivaten und N- und O-Formalen. |
| 4 | Entschäumer, Byk 021 der Fa. Byk-Chemie GmbH Wesel, auf Basis hydrophober Feststoffe und Polysiloxane in Polyglykol. |
| 180 | Verdickerlösung, 2 %ig eines Celluloseethers in Wasser, Natrosol 250 HR d. Fa. Hercules GmbH, Düsseldorf |
| 70 | Pigment, Titandioxid, Kronos 2300 der Fa. Kronos Titan GmbH, Leverkusen |
| 5 | Füllstoff, gefällte Kieselsäure, Sipernat 820 A der Fa. Degussa AG, Düsseldorf |
| 235 | Füllstoff, Calciumcarbonat, mittlerer Teilchendurchmesser 5 mµ, Omyacarb 5 GU der Fa. Omya GmbH, Köln |
| 55 | Füllstoff, Calciumcarbonat, gefällt, Socal P2 der Fa. Solvay Soda Deutschland GmbH, Bernburg |
| 100 | Füllstoff, Calciumcarbonat, Omyalite 90 der Fa. Omya GmbH, Köln |
| 65 | Füllstoff, Mischung aus Magnesiumsilikat (Talkum) und Calcium/Magnesiumcarbonat (Dolomit), mittlerer Teilchendurchmesser 6 mµ, Naintsch SE-Micro der Fa. Luze-nac Deutschland GmbH, Düsseldorf |
| 2 | Entschäumer, Byk 018 der Fa. Byk-Chemie GmbH, Wesel, auf Basis von Polysiloxanen und hydrophoben Feststoffen, in Polyglykol. |
| 109 | Dispersion, 50 %ig in Wasser (=Bindemittel), hergestellt nach Vorschrift in Abschnitt B |
| 51-x Gew.-Teile | Wasser |

### D. Prüfung der Dispersionsfarben

Die aus dem Abschnitt C erhaltenen Dispersionsfarben wurden mit einem 60 mm breiten Rakel geeigneter Spaltweite auf Leneta-Folie aufgezogen, so dass Filme mit 100 µm Trockenschichtdicke resultierten. Diese Filme wurden bei Raumtemperatur und 50 % rel. Luftfeuchte 7 Tage gelagert. Anschließend wurden in einem Scheuergerät entsprechend DIN 53778, Teil 2 die Anzahl Doppelhübe bis zum Durchscheuern der Beschichtung bzw. entsprechend DIN ISO 11998 der Abrieb in nach 200 Doppelhüben bestimmt.

In der nachfolgenden Tabelle II sind für die erfindungsgemäßen Beispiele 4,6 und 7 sowie für die Vergleichsbeispiele 1,2,3 und 5 u.a. die Säurezahl des jeweils eingesetzten Pigmentverteilers III sowie der Naßabrieb und die Naßscheuerfestigkeit der erhaltenen Dispersionsfarbe aufgeführt.

**Tabelle II**

| Bsp. Nr. | Bindemittel Nr. | Pigmentverteiler Feststoffgehalt/Kation | Rezept Nr. | Menge Pigmentverteiler "X"(Gew.-Teile in Rezept Nr. 2) | Säurezahl des Pigmentverteilers | Scheuerfestigkeit (Naßabrieb) [µm] | Naßscheuerfestigkeit [Scheuerzyklen] |
|---|---|---|---|---|---|---|---|
| 1 | 1 | Pigmentverteiler S 45 %; Na | 1 | - | 780 | 81 | 1.000 |
| 2 | 2 | Pigmentverteiler S 45 %; Na | 1 | - | 780 | 77 | 900 |
| 3 | 1 | Collacral®LR 8954 30 %; NH₄ | 2 | 5 | 195 | 48 | 2.500 |
| 4 | 2 | Collacral®LR 8954 30 %; NH₄ | 2 | 5 | 195 | 33 | 4.000 |
| 5 | 1 | Densodrin®BA 25 %, Na | 2 | 6,5 | 240 | 38 | 4.000 |
| 6 | 3 | Densodrin®BA 25 %, Na | 2 | 6,5 | 240 | 25 | >10.000 |
| 7 | 2 | Densodrin®BA 25 %, Na | 2 | 6,5 | 240 | 24 | >10.000 |

Die Säurezahl des Pigmentverteilers bezieht sich auf den nicht neutralisierten Feststoffs. Sie wurde nach DIN 53 402 bestimmt oder den technischen Informationsschriften des Herstellers entnommen (Joncryl, Atofina).

Bei Densodrin BA handelt es sich um einen Pigmentverteiler der BASF AG. Er besteht aus einem Copolymer von Maleinsäureanhydrid mit einem C₂₀-alpha-Olefin, wobei die Anhydridgruppen mit NaOH zum Di-natriumsalz geöffnet wurden. Bei Collacral®LR 8954 handelt es sich um einen Pigmentverteiler der Firma BASF AG in Form eines Copolymerisats aus Acrylsäure und n-Butylacrylat, welches mit Ammoniak neutralisiert ist.

## Patentansprüche

1. Pigmenthaltige, lösungsmittelfreie Zubereitung, enthaltend
I) ein Bindemittel auf der Basis wenigstens eines Copolymerisats P in Form einer wässrigen Polymerisatdispersion, welche erhältlich ist durch radikalische, wässrige Emulsionspolymerisation einer Monomermischung, enthaltend
a) 45 bis 69,95 Gew.-% wenigstens eines Monomeren a), dessen Homopolymerisat eine Glastemperatur T_{g} von weniger als 20°C aufweist,
b) 30 bis 54,95 Gew.-% wenigstens eines Monomeren b), dessen Homopolymerisat eine Glastemperatur T_{g} von mehr als 50°C aufweist,
c) 0,05 bis 1,5 Gew.-% Itaconsäure bzw. deren Anhydrid bzw. deren Salze als saures Monomer c), und
d) 0 bis 2 Gew.-% wenigstens eines weiteren Monomeren d),
wobei die Summe der Gew.-% a) bis d) 100 Gew.-% beträgt,
II) wenigstens ein Pigment,
III) wenigstens einen Pigmentverteiler mit einer Säurezahl, bestimmt nach DIN 53402, von weniger als 300,
IV) gegebenenfalls einen anorganischen Füllstoff und
V) übliche Hilfsmittel,
**dadurch gekennzeichnet, dass** als Pigmentverteiler III, Copolymere von Acrylsäure, Styrol und α-Methylstyrol, Copolymere von Acrylsäure mit Alkylacrylaten wie n-Butylacrylat, Verseifte Copolymere des Maleinsäureanhydrids mit C₁₀-C₃₀-α-Olefine oder Verseifte verseifte Copolymere des Maleinsäureanhydrids mit Styrol eingesetzt werden.

2. Zubereitung nach Anspruch 1, wobei das Monomere a) aus der Gruppe Vinylether von C₃-C₁₀-Alkanolen, verzweigte und unverzweigte C₃-C₁₀-Olefine, C₁-C₁₀-Alkylacrylate, C₅-C₁₀-Alkylmethacrylate, C₅-C₁₀-Cycloalkyl(meth)acrylate, C₁-C₁₀-Dialkylmaleinate und C₁-C₁₀-Dialkylfumarate ausgewählt ist.

3. Zubereitung nach den Ansprüchen 1 oder 2, wobei das Monomere b) aus der Gruppe der vinylaromatischen Monomere, α,β-ungesättigte Carbonsäurenitrile oder Carbonsäuredinitrile ausgewählt ist.

4. Zubereitung nach den Ansprüchen 1 bis 3, wobei Itaconsäure alleiniges saures Monomer c) ist.

5. Zubereitung nach den Ansprüchen 1 bis 4, wobei das Monomere d) aus der Gruppe der Amide α,β -ungesättigter C₃-C₆-Carbonsäuren, deren Hydroxy-C₂-C₆-alkylestern und/oder N-Vinyllactamen ausgewählt ist.

6. Zubereitung nach einem der Ansprüche 1 bis 5, wobei ein anorganisches Pigment II verwendet wird.

7. Zubereitung nach einem der Ansprüche 1 bis 6, wobei diese einen anorganischen Füllstoff IV enthält, welcher aus der Gruppe der Alumosilicate, der Silicate, der Erdalkalicarbonate oder der Erdalkalisulfate ausgewählt ist.

8. Zubereitung nach einem der Ansprüche 1 bis 7, wobei diese als übliche Hilfsmittel V u.a. Viskositätsmodifizierer, Dispergiermittel, Entschäumer, Konservierungsmittel, Hydrophobiermittel, Farbstoffe oder Fasern enthält.

9. Zubereitung nach einem der Ansprüche 1 bis 8, enthaltend
4,0 bis 30 Gew.-% des Bindemittels I,
1,0 bis 30 Gew.-% des Pigments II,
0,01 bis 1,0 Gew.-% des Pigmentverteilers III,
40 bis 93 Gew.-% des anorganischen Füllstoffs IV und
0,1 bis 10 Gew.-% übliche Hilfsmittel V.

10. Verfahren zur Herstellung einer Zubereitung gemäß den Ansprüchen 1 bis 9, wobei zunächst das Bindemittel I durch radikalische wässrige Emulsionspolymerisation der Monomeren a), b) und c) sowie gegebenenfalls d) hergestellt wird, **dadurch gekennzeichnet, daß** das Bindemittel I anschließend mit dem Pigment II, dem Pigmentverteiler III, gegebenenfalls dem Füllstoff IV und dem Hilfsmittel V in einem Dissolver abgemischt wird.

11. Verfahren nach Anspruch 10, **dadurch gekennzeichnet, daß** die radikalische wäßrige Emulsionspolymerisation der Monomeren a), b), c) und gegebenenfalls d) bei Temperaturen von 10 bis 120°C erfolgt.

12. Verwendung der Zubereitung gemäß einem der Ansprüche 1 bis 9 als Dispersionsfarbe.

13. Verwendung der Zubereitung gemäß einem der Ansprüche 1 bis 9 als Papierstreichfarbe.

## Claims

1. A solvent-free pigmented formulation comprising
I) a binder based on at least one copolymer P in an aqueous polymer dispersion obtainable by free-radical aqueous emulsion polymerization of a monomer mixture comprising
a) from 45 to 69.95% by weight of at least one monomer a) whose homopolymer has a glass transition temperature T_{g} of less than 20°C,
b) from 30 to 54.95% by weight of at least one monomer b) whose homopolymer has a glass transition temperature T_{g} of more than 50°C,
c) from 0.05 to 1.5% by weight of itaconic acid and/or its anhydride and/or its salts, as acidic monomer c), and
d) from 0 to 2% by weight of at least one
further monomer d),
the sum of the % by weight of a) to d) being 100% by weight,
II) at least one pigment,
III) at least one pigment dispersant having an acid number to DIN 53402 of less than 300,
IV) optionally an inorganic filler, and
V) customary auxiliaries,
wherein the pigment dispersants III used include copolymers of acrylic acid, styrene and α-methylstyrene, copolymers of acrylic acid with alkyl acrylates such as n-butyl acrylate, hydrolyzed copolymers of maleic anhydride with C₁₀-C₃₀ α-olefins or hydrolyzed copolymers of maleic anhydride with styrene.

2. The formulation according to claim 1, wherein the monomer a) is selected from the group consisting of vinyl ethers of C₃-C₁₀ alkanols, branched and unbranched C₃-C₁₀ olefins, C₁-C₁₀ alkyl acrylates, C₅-C₁₀ alkyl methacrylates, C₅-C₁₀ cycloalkyl (meth)acrylates, C₁-C₁₀ dialkyl maleates, and C₁-C₁₀ dialkyl fumarates.

3. The formulation according to claim 1 or 2, wherein the monomer b) is selected from the group consisting of vinylaromatic monomers, α,β-unsaturated carbonitriles or carbodinitriles.

4. The formulation according to any of claims 1 to 3, wherein itaconic acid is the sole acidic monomer c).

5. The formulation according to any of claims 1 to 4, wherein the monomer d) is selected from the group consisting of amides of α,β-unsaturated C₃-C₆ carboxylic acids, their C₂-C₆ hydroxyalkyl esters and/or N-vinyllactams.

6. The formulation according to any of claims 1 to 5, wherein an inorganic pigment II is used.

7. The formulation according to any of claims 1 to 6, comprising an inorganic filler IV selected from the group consisting of aluminosilicates, silicates, alkaline earth metal carbonates, and alkaline earth metal sulfates.

8. The formulation according to any of claims 1 to 7, comprising as customary auxiliaries V inter alia viscosity modifiers, dispersants, defoamers, preservatives, hydrophobicizers, dyes or fibers.

9. The formulation according to any of claims 1 to 8, comprising
from 4.0 to 30% by weight of the binder I,
from 1.0 to 30% by weight of the pigment II,
from 0.01 to 1.0% by weight of the pigment dispersant III,
from 40 to 93% by weight of the inorganic filler IV, and
from 0.1 to 10% by weight of customary auxiliaries V.

10. A process for preparing a formulation according to any of claims 1 to 9, in which first the binder I is prepared by free-radical aqueous emulsion polymerization of the monomers a), b) and c) and optionally d), which comprises then blending the binder I with the pigment II, the pigment dispersant III, optionally the filler IV and the auxiliary V in a dissolver.

11. The process according to claim 10, wherein the free-radical aqueous emulsion polymerization of the monomers a), b), c) and optionally d) takes place at temperatures of from 10 to 120°C.

12. The use of the formulation according to any of claims 1 to 9 as an emulsion paint.

13. The use of the formulation according to any of claims 1 to 9 as a colored paper coating slip.

## Revendications

1. Composition sans solvant, contenant un pigment, qui contient
I) un liant à base d'au moins un copolymère P sous forme d'une dispersion aqueuse de polymère, qui peut être obtenu par polymérisation radicalaire en émulsion aqueuse d'un mélange de monomères, contenant
a) 45 à 69,95 % en poids d'au moins un monomère a) dont l'homopolymère présente une température de transition vitreuse T_{g} inférieure à 20 °C,
b) 30 à 54,95 % en poids d'au moins un monomère b) dont l'homopolymère présente une température de transition vitreuse T_{g} supérieure à 50 °C,
c) 0,05 à 1,5 % en poids d'acide itaconique ou de son anhydride ou de ses sels, en tant que monomère acide c), et
d) 0 à 2 % en poids d'au moins un autre monomère d),
la somme des pourcentages en poids a) à d) étant égale à 100 % en poids.
II) au moins un pigment,
III) au moins un dispersant de pigment ayant un indice d'acide, déterminé selon DIN 53402, inférieur à 300,
IV) éventuellement une charge inorganique et
V) des adjuvants usuels,
**caractérisée en ce qu'**on utilise comme dispersant de pigment III des copolymères d'acide acrylique, styrène et α-méthylstyrène, des copolymères d'acide acrylique avec des acrylates d'alkyle tels que l'acrylate de n-butyle, des copolymères saponifiés de l'anhydride maléique avec des α-oléfines en C₁₀-C₃₀ ou des copolymères saponifiés de l'anhydride maléique avec le styrène.

2. Composition selon la revendication 1, dans laquelle le monomère a) est choisi dans le groupe constitué par des éthers vinyliques d'alcanols en C₃-C₁₀, des oléfines en C₃-C₁₀ ramifiées ou non ramifiées, des acrylates d'alkyle en C₁-C₁₀, des méthacrylates d'alkyle en C₅-C₁₀, des (méth)acrylates de cycloalkyle en C₅-C₁₀, des maléates de dialkyle en C₁-C₁₀ et des fumarates de dialkyle en C₁-C₁₀.

3. Composition selon la revendication 1 ou 2, dans laquelle le monomère b) est choisi dans le groupe des monomères vinylaromatiques, des carbonitriles ou carbodinitriles α,β-insaturés.

4. Composition selon les revendications 1 à 3, dans laquelle l'acide itaconique est le seul monomère c) acide.

5. Composition selon les revendications 1 à 4, dans laquelle le monomère d) est choisi dans le groupe des amides d'acides carboxyliques en C₃-C₆ α,β-insaturés, de leurs esters d'hydroxyalkyle en C₂-C₆ et/ou des N-vinyllactames.

6. Composition selon l'une quelconque des revendications 1 à 5, dans laquelle on utilise un pigment inorganique II.

7. Composition selon l'une quelconque des revendications 1 à 6, dans laquelle celle-ci contient une charge inorganique IV qui est choisie dans le groupe des aluminosilicates, des silicates, des carbonates de métaux alcalino-terreux ou des sulfates de métaux alcalino-terreux.

8. Composition selon l'une quelconque des revendications 1 à 7, dans laquelle celle-ci contient en tant qu'adjuvants usuels V en particulier des agents modificateurs de viscosité, des dispersants, des antimousses, des conservateurs, des agents d'hydrophobie, des colorants ou des fibres.

9. Composition selon l'une quelconque des revendications 1 à 8, contenant
4,0 à 30 % en poids du liant I,
1,0 à 30 % en poids du pigment II,
0,01 à 1,0 % en poids du dispersant de pigment III,
40 à 93 % en poids de la charge inorganique IV et
0,1 à 10 % en poids d'adjuvants usuels V.

10. Procédé pour la préparation d'une composition selon les revendications 1 à 9, dans lequel on prépare d'abord le liant I par polymérisation radicalaire en émulsion aqueuse des monomères a), b) et c) ainsi qu'éventuellement d), **caractérisé en ce que** dans un dissolveur on y incorpore ensuite le pigment II, le dispersant de pigment III, éventuellement la charge IV et l'adjuvant V.

11. Procédé selon la revendication 10, **caractérisé en ce que** la polymérisation radicalaire en émulsion aqueuse des monomères a), b), c) et éventuellement d) s'effectue à des températures de 10 à 120 °C.

12. Utilisation de la composition selon l'une quelconque des revendications 1 à 9, en tant que peinture en dispersion.

13. Utilisation de la composition selon l'une quelconque des revendications 1 à 9, en tant que sauce de couchage de papier.
